(19) Europäisches Patentamt
European Patent Office
Office européen des brevets

(11) **EP 2 172 024 B1**

(12) **FASCICULE DE BREVET EUROPEEN**

(45) Date de publication et mention
de la délivrance du brevet:
**11.07.2012   Bulletin 2012/28**

(51) Int Cl.:
*H04N 7/26* (2006.01)    *G06T 7/00* (2006.01)
*H04N 5/262* (2006.01)    *H04N 5/44* (2011.01)
*G06T 15/00* (2011.01)

(21) Numéro de dépôt: **08806058.7**

(22) Date de dépôt: **23.06.2008**

(86) Numéro de dépôt international:
**PCT/FR2008/051126**

(87) Numéro de publication internationale:
**WO 2009/007580 (15.01.2009 Gazette 2009/03)**

(54) **PROCEDES ET DISPOSITIFS DE CODAGE ET DE DECODAGE D'UNE SEQUENCE D'IMAGES REPRESENTEE A L'AIDE DE TUBES DE MOUVEMENT, PRODUITS PROGRAMME D'ORDINATEUR ET SIGNAL CORRESPONDANTS**

VERFAHREN UND VORRICHTUNGEN ZUR KODIERUNG UND DEKODIERUNG EINER MITHILFE VON BEWEGUNGSRÖHREN DARGESTELLTEN BILDFOLGE SOWIE COMPUTERPROGRAMME UND SIGNAL DAFÜR

METHOD AND DEVICES FOR CODING AND DECODING AN IMAGE SEQUENCE REPRESENTED WITH THE AID OF MOTION TUBES, CORRESPONDING COMPUTER PROGRAM PRODUCTS AND SIGNAL

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.06.2007   FR 0756007**

(43) Date de publication de la demande:
**07.04.2010   Bulletin 2010/14**

(73) Titulaire: **FRANCE TELECOM**
**75015 Paris (FR)**

(72) Inventeurs:
- **PATEUX, Stéphane**
  **F-35700 Rennes (FR)**
- **LE GUEN, Benjamin**
  **80637 Munich (DE)**
- **CAMMAS, Nathalie**
  **F-35490 Sens de Bretagne (FR)**
- **AMONOU, Isabelle**
  **F-35235 Thorigne-Fouillard (FR)**
- **KERVADEC, Sylvain**
  **F-35490 Sens de Bretagne (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**EP-A- 0 625 853      WO-A-01/49036**
**US-A- 5 923 786**

- **HEECHAN PARK ET AL: "Progressive Mesh-Based Motion Estimation Using Partial Refinement" VISUAL CONTENT PROCESSING AND REPRESENTATION LECTURE NOTES IN COMPUTER SCIENCE;;LNCS, SPRINGER-VERLAG, BE, vol. 3893, 2006, pages 92-98, XP019030429 ISBN: 3-540-33578-1**
- **YAO WANG ET AL: "ACTIVE MESH A FEATURE SEEKING AND TRACKING IMAGE SEQUENCE REPRESENTATION SCHEME" IEEE TRANSACTIONS ON IMAGE PROCESSING, IEEE SERVICE CENTER, PISCATAWAY, NJ, US, vol. 3, no. 5, 1 septembre 1994 (1994-09-01), pages 610-624, XP000476835 ISSN: 1057-7149**
- **HASSAN MANSOUR ET AL: "An Efficient Multiple Description Coding Scheme for the Scalable Extension of H.264/AVC (SVC)" SIGNAL PROCESSING AND INFORMATION TECHNOLOGY, 2006 IEEE INTERNATIONAL SYMPOSIUM ON, IEEE, PI, août 2006 (2006-08), pages 519-523, XP031002484 ISBN: 0-7803-9753-3**

- OLIVIER BROUARD ET AL: "ROBUST MOTION SEGMENTATION FOR HIGH DEFINITION VIDEO SEQUENCES USING A FAST MULTI-RESOLUTION MOTION ESTIMATION BASED ON SPATIO-TEMPORAL TUBES", 26. PICTURE CODING SYMPOSIUM;7-11-2007 - 9-11-2007; LISBON,, 7 November 2007 (2007-11-07), XP030080472,

- HSU R ET AL: "Tube-based video coding", SIGNAL PROCESSING. IMAGE COMMUNICATION, ELSEVIER SCIENCE PUBLISHERS, AMSTERDAM, NL, vol. 9, no. 3, 1 March 1997 (1997-03-01), pages 249-266, XP004057105, ISSN: 0923-5965, DOI: DOI: 10.1016/S0923-5965(96)00034-3

**Description**

**1. Domaine de l'invention**

Le domaine de l'invention est celui du codage et du décodage de séquences d'images.

Plus précisément, l'invention concerne le traitement de séquences d'images vidéo ou de scènes bidimensionnelles ou tridimensionnelles (ou présentant un nombre supérieur de dimensions), représentées à l'aide de tubes de mouvement.

**2. Art antérieur**

Les codeurs vidéo actuels, tels que développés par exemple dans la norme AVC H.264/MPEG-4 (« Advanced Video Coding » pour « codage vidéo avancé ») de l'Union Internationale des Télécommunications (en anglais ITU pour « International Télécommunication Union ») présentée dans le document ISO/IEC 14496-10, permettent de coder une séquence d'images pour délivrer une séquence codée, compressée par rapport à la séquence d'images source.

Pour ce faire, ces codeurs utilisent une représentation discontinue de la séquence vidéo. Plus précisément, les images de la séquence sont découpées en blocs de pixels, un bloc de pixels correspondant à un regroupement de pixels adjacents. Ces codeurs sont basés sur un traitement des informations contenues dans ces blocs qui implique une étape de transformation, une étape de quantification et une étape de codage entropique. Ainsi, chaque bloc est codé par prédiction intra-images ou inter-images.

Un inconvénient de ces techniques de l'art antérieur est que les blocs dans chaque image sont définis indépendamment des blocs des autres images de la séquence. Ceci entraîne une représentation discontinue du mouvement dans la séquence, et donc une mauvaise représentation du mouvement réel et des surcoûts en termes de débit de compression.

Il a alors été proposé des techniques alternatives offrant une représentation continue du mouvement, basées sur des maillages par exemple.

Cependant, un inconvénient de ces techniques basées maillage est que les mouvements entre les régions sont contraints, et ne permettent donc pas de représenter les ruptures du champ de mouvement pouvant survenir dans la séquence d'images (par exemple dues aux apparitions ou aux disparitions d'objets), entre deux régions ayant des mouvements différents.

De plus, un autre inconvénient de ces techniques provient de l'utilisation de maillages irréguliers, pour lesquelles la structure des mailles au cours du temps doit être transmise. En effet, cette transmission d'informations supplémentaires entraîne des pénalités en termes de performances en compression.

Le document HSU R ET AL: "Tube-based video coding", SIGNAL PROCESSING, IMAGE COMMUNICATION, ELSEVIER SCIENCE PUBLISHERS, AMSTERDAM, NL, présente une stratégie de compression vidéo, basée sur une représentation utilisant des tubes de mouvement.

Il existe donc un besoin pour de nouvelles techniques de codage/décodage d'images permettant de pallier au moins en partie les inconvénients de l'art antérieur.

**3. Exposé de l'invention**

L'invention propose une solution nouvelle qui ne présente pas l'ensemble de ces inconvénients de l'art antérieur, sous la forme d'un procédé de décodage d'un signal représentatif d'une séquence d'images.

Selon l'invention, un tel procédé comprend les étapes suivantes :

- extraction dudit signal de tubes de mouvement, un tube comprenant un bloc de pixels pouvant évoluer indépendamment d'au moins un autre tube, deux tubes pouvant, à un instant donné, allouer à un même pixel d'une desdites images des valeurs différentes,
  chacun desdits tubes étant défini par au moins les informations suivantes :

    - un bloc de pixels de référence comprenant des informations de texture de référence ;
    - des instants de début de tube et de fin de tube ;
    - des informations de transition, permettant de mettre à jour ledit bloc de référence à au moins un instant t de ladite séquence ;

- traitement desdites informations de transition, délivrant un bloc courant pour chacun desdits tubes dans une image courante à un instant t ;
- combinaison des informations associées aux blocs courants d'au moins deux desdits tubes se chevauchant dans une zone de chevauchement de ladite image courante, de façon à reconstruire des pixels optimisés dans ladite zone de chevauchement.

Ainsi, l'invention repose sur une approche nouvelle et inventive du décodage d'une séquence d'images, représentée sous la forme de tubes de mouvement.

Plus précisément, un tube de mouvement correspond à un bloc de pixels évoluant au cours du temps. Au cours de cette évolution, le tube peut se déformer, par exemple pour prendre en compte le mouvement apparent, ou bien encore si le nombre de pixels présents dans le bloc augmente ou diminue. Ce tube peut également se raffiner, par exemple en passant au niveau sous-pixellique du bloc.

Ainsi, les différents tubes de mouvement peuvent évoluer indépendamment les uns des autres. Une séquence d'images est alors représentée par un ensemble de tubes de mouvement se déplaçant dans l'espace au cours du temps, en suivant les trajectoires de mouvement de la séquence. Cette « persistance temporelle » des tubes permet de représenter de façon continue la séquence vidéo. De plus, cette représentation permet de représenter efficacement à la fois les zones de continuité et de discontinuité du mouvement d'une séquence.

On rappelle qu'au contraire, dans les techniques de codage par prédiction des blocs de l'art antérieur, les blocs dans chaque image sont définis indépendamment des blocs des autres images de la séquence. Il n'y a donc pas de suivi dans ces prédictions.

En particulier, côté décodage, on extrait selon l'invention les tubes de mouvement du signal reçu, afin de traiter les informations de transition de ces tubes, et de reconstruire pour chaque tube un bloc courant, potentiellement déformé, dans l'image que l'on cherche à reconstruire.

On combine ensuite les informations associées aux blocs courants correspondant à des tubes se chevauchant, pour reconstruire les pixels situés dans la zone de chevauchement. On entend notamment par zone de chevauchement une zone dans laquelle les blocs courants associés aux tubes ont des pixels en commun.

En particulier, le bloc de pixels à l'instant de début d'un tube, appelé bloc de départ, peut correspondre directement au bloc de pixels de référence définissant ledit tube, ou bien être obtenu à partir d'une modification dudit bloc de pixels de référence. Une telle modification correspond par exemple à un codage incluant une transformation géométrique (transformation homographique, transformation affine, rotation, ...).

Selon un mode de réalisation particulier de l'invention, l'étape de combinaison comprend, pour au moins un pixel de la zone de chevauchement, une opération de calcul d'une moyenne de la valeur de texture attribuée au pixel dans chacun desdits tubes se chevauchant.

En particulier, cette moyenne peut être pondérée, en fonction d'au moins un des critères appartenant au groupe comprenant :

- une information de profondeur associée à chacun desdits tubes ;
- une information de priorité associée à chacun desdits tubes ;
- l'instant de création et/ou la durée de chacun desdits tubes ;
- une information de position du pixel considéré dans chacun desdits tubes ;
- une information relative à un type de tube de chacun desdits tubes.

Autrement dit, on détermine des pixels optimisés dans une zone de chevauchement à partir d'une combinaison (linéaire, géométrique, ...) des valeurs de texture attribuées aux pixels dans chacun desdits tubes se chevauchant.

Selon un aspect spécifique de l'invention, l'étape d'extraction délivre des tubes de différents types, comprenant notamment des tubes de base et des tubes de raffinement destinés à améliorer la restitution d'au moins un tube de base.

Les évolutions des tubes de raffinement peuvent être libres par rapport à l'évolution des tubes de base.

En particulier, les tubes de raffinement comprennent :

- des tubes additifs, un tube additif comprenant des informations de résidu destinées à être ajoutées aux informations d'un tube de base ; et
- des tubes de description, un tube de description comprenant des informations de description délivrant une deuxième description complémentaire et/ou redondante d'une première description fournie par des informations d'un tube de base. Par exemple, la première description permet de décrire les pixels pairs d'un bloc et la deuxième description permet de décrire les pixels impairs.

L'invention trouve ainsi selon ce mode de réalisation des applications dans le codage et le décodage de données échelonnable (ou « scalable »), présentant une qualité adaptable et une résolution spatio-temporelle variable.

Selon une variante d'implémentation visant à réaliser une représentation scalable exploitant les corrélations entre les tubes de base et les tubes de raffinement de type additif, on considère qu'un tube de raffinement de type additif est lié au tube de base qu'il détaille. Par conséquent, l'évolution temporelle du tube de raffinement de type additif est dépendante de l'évolution temporelle du tube de base.

Selon une caractéristique particulière de l'invention, les informations de transition définissant un tube de mouvement comprennent :

- des informations de modification de position et/ou de déplacement du bloc dans ladite image courante ; et
- des informations de modification de ladite texture.

Ces informations de transition permettent notamment de reconstruire le bloc courant dans l'image courante, en tenant compte des modifications qu'il a subies par rapport à une image précédemment décodée. Par exemple, ces modifications correspondent à une mise à jour d'image en image, à un codage par transformation spatiale et/ou temporelle, etc.

Par exemple, les informations de transition comprennent des informations de déformation du bloc mettant en oeuvre au moins une des opérations appartenant au groupe comprenant :

- une transformation homographique ;
- une transformation affine ;
- une rotation ;

cette opération étant effectuée lors de l'étape de traitement en tenant compte des informations de déformation.

Selon un mode de réalisation particulier de l'invention, le procédé de décodage comprend une étape de création et de mise à jour d'une liste de tubes de référence. Cette étape de création de la liste peut être effectuée pour la première image de la séquence.

Selon une caractéristique particulière de l'invention, l'étape d'extraction comprend une étape de lecture, à un instant t, pour chacun des tubes d'au moins une des informations suivantes :

- une indication d'utilisation ou non dudit tube ;
- une indication d'utilisation ou non d'une prédiction pour ledit tube ;
- une information de position dudit tube dans l'image ;
- une information relative à un type de tube ;
- des données de texture.

Par exemple, le procédé de décodage comprend les étapes suivantes :

- lecture des informations définissant les tubes de référence (bloc de pixels de références, instant de début et de fin de tube, informations de transition) ;
- pour chaque tube de référence :

  ■ lecture d'une indication d'utilisation ou non dudit tube de référence pour la reconstruction d'une image courante,
  ■ lecture d'une information de modification de la texture et de modification de position et/ou de déplacement dudit tube de référence, et
  ■ mise à jour de ladite liste de tubes de référence ;

- pour chaque bloc de l'image courante :

  ■ lecture d'une indication d'utilisation ou non d'une prédiction par tubes de mouvement ;
  ■ lecture d'une indication de création ou non d'un nouveau tube, et
  ■ si nécessaire, lecture des informations définissant ledit nouveau tube ;

- lecture des informations de mise à jour de la liste de référence des tubes ;
- reconstruction de l'image courante.

Dans un autre mode de réalisation, l'invention concerne un dispositif de décodage d'un signal représentatif d'une séquence d'images.

Selon l'invention, un tel dispositif comprend :

- des moyens d'extraction dudit signal de tubes de mouvement, un tube comprenant un bloc de pixels pouvant évoluer indépendamment d'au moins un autre tube,

- des moyens de traitement desdites informations de transition, délivrant un bloc courant pour chacun desdits tubes dans une image courante à un instant t ;
- des moyens de combinaison des informations associées aux blocs courants d'au moins deux desdits tubes se chevauchant dans une zone de chevauchement de ladite image courante, de façon à reconstruire des pixels optimisés dans ladite zone de chevauchement.

Un tel dispositif de décodage est notamment adapté à mettre en oeuvre le procédé de décodage décrit précédemment. Il s'agit par exemple d'un décodeur vidéo de type H.264 ou H.264 amendé.

Un autre aspect de l'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de décodage décrit précédemment.

Un autre mode de réalisation de l'invention concerne un procédé de codage d'une séquence d'images.

Selon l'invention, un tel procédé de codage comprend les étapes suivantes :

- insertion, dans un signal représentatif de ladite séquence, de tubes de mouvement, un tube comprenant un bloc de pixels pouvant évoluer indépendamment d'au moins un autre tube,
  deux tubes pouvant, à un instant donné, allouer à un même pixel d'une desdites images des valeurs différentes,
  chacun desdits tubes étant défini par au moins les informations suivantes :

  - un bloc de pixels de référence comprenant des informations de texture de référence ;
  - des instants de début de tube et de fin de tube ;
  - des informations de transition, permettant de mettre à jour ledit bloc de référence à au moins un instant t de ladite séquence ;

- génération des informations de transition définissant lesdits tubes de mouvement ;
  de façon à permettre, au décodage, une combinaison des informations associées aux blocs courants d'au moins deux desdits tubes se chevauchant dans une zone de chevauchement d'une image courante, pour reconstruire des pixels optimisés dans la zone de chevauchement.

Un tel procédé de codage est notamment adapté à coder une séquence d'images destinée à être décodée selon le procédé de décodage décrit précédemment.

En particulier, un tel procédé de codage comprend deux principales phases :

- une phase d'établissement des tubes de mouvement, permettant de construire lesdits tubes à partir desdites informations, et
- une phase de codage desdits tubes de mouvement.

Selon un mode de réalisation particulier de l'invention :

- la phase d'établissement comprend les étapes suivantes :

  o obtention d'une liste de tubes de mouvement de référence ;
  o pour chaque tube de référence :

    ■ détermination d'une information de position dudit tube de référence dans une image à coder de ladite séquence,
    ■ détermination d'une indication d'utilisation ou non dudit tube de référence ; et
    ■ mise à jour des informations de texture ;

  ○ pour chaque bloc de l'image à coder :

    ■ détermination d'une indication d'utilisation ou non d'une prédiction par tubes de mouvement pour la reconstruction dudit bloc ;

- et la phase de codage comprend les étapes suivantes :

  ○ codage de ladite liste de tubes de mouvement de référence ;

○ pour chaque tube de référence :

■ codage de ladite indication d'utilisation ou non dudit tube de référence ;
■ codage des informations de modification de texture et de modification de position et/ou de déplacement si ce tube de référence est utilisé ;

○ pour chaque bloc de l'image à coder :

■ codage de l'indication d'utilisation ou non d'une prédiction à l'aide d'au moins un tube de mouvement ;
■ codage de la création ou non d'un nouveau tube à partir de ce bloc ;

○ codage des informations de mise à jour de ladite liste de référence.

Un autre mode de réalisation concerne un dispositif de codage d'une séquence d'images.

Un tel dispositif comprend :

- des moyens d'insertion, dans un signal représentatif de ladite séquence, de tubes de mouvement, un tube comprenant un bloc de pixels pouvant évoluer indépendamment d'au moins un autre tube,
- des moyens de génération des informations de transition définissant lesdits tubes de mouvement ;

de façon à permettre, au décodage, une combinaison des informations associées aux blocs courants d'au moins deux desdits tubes se chevauchant dans une zone de chevauchement d'une image courante, pour reconstruire des pixels optimisés dans la zone de chevauchement.

Un tel dispositif de codage est notamment adapté à mettre en oeuvre le procédé de codage décrit précédemment. Il s'agit par exemple d'un codeur vidéo de type H.264 ou H.264 amendé.

Un autre aspect de l'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de codage décrit précédemment.

Encore un autre aspect de l'invention concerne un signal représentatif d'une séquence d'images.

Un tel signal comprend des tubes de mouvement, un tube comprenant un bloc de pixels pouvant évoluer indépendamment d'au moins un autre tube,

deux tubes pouvant, à un instant donné, allouer à un même pixel d'une desdites images des valeurs différentes,

chacun desdits tubes étant défini par au moins les informations suivantes :

- un bloc de pixels de référence comprenant des informations de texture de référence ;
- des instants de début de tube et de fin de tube ;
- des informations de transition, permettant de mettre à jour ledit bloc de référence à au moins un instant t de ladite séquence ;

ledit signal comprenant des informations de transition associées à chacun desdits tubes de mouvement,

de façon à permettre, au décodage, une combinaison des informations associées aux blocs courants d'au moins deux desdits tubes se chevauchant dans une zone de chevauchement d'une image courante, pour reconstruire des pixels optimisés dans la zone de chevauchement.

Un tel signal peut notamment représenter un flux de données codé selon le procédé de codage décrit ci-dessus. Ce signal pourra bien sûr comporter les différentes caractéristiques relatives au procédé de codage selon l'invention.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre un exemple de représentation d'une séquence d'images à l'aide de tubes de mouvement ;
- la figure 2 présente les évolutions d'un bloc dans un tube de mouvement au cours du temps ;
- la figure 3 présente les principales étapes du procédé de décodage selon un mode de réalisation de l'invention ;
- la figure 4 illustre le mécanisme de gestion des chevauchements ;
- la figure 5 présente les principales étapes du procédé de codage selon un mode de réalisation de l'invention ;

- les figures 6A et 6B présentent la structure d'un dispositif de codage et d'un dispositif de décodage selon un mode de réalisation particulier de l'invention.

## 5. Description d'un mode de réalisation de l'invention

### 5.1 Principe général

Le principe général de l'invention repose sur le codage et le décodage d'une séquence d'images 2D ou 3D représentée à l'aide de tubes de mouvement.

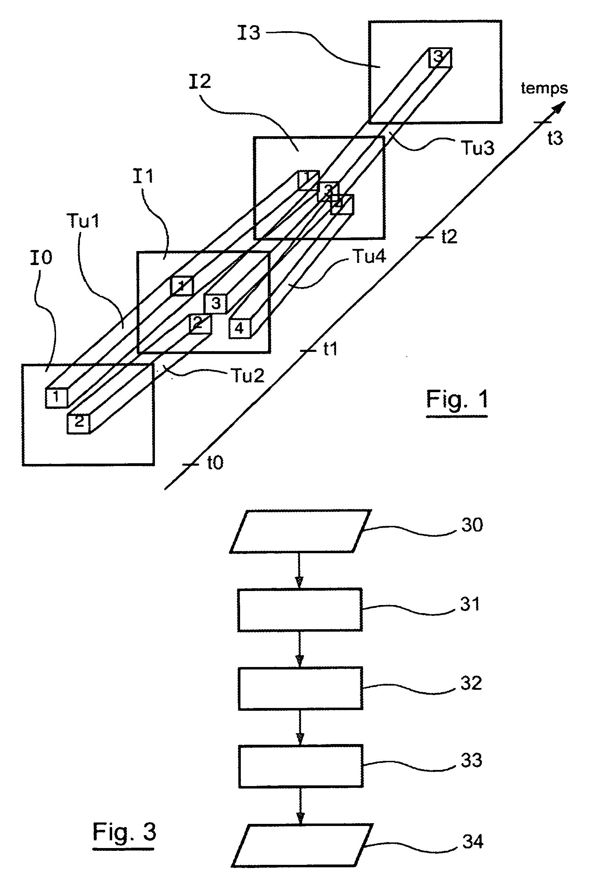

On présente en relation avec la figure 1 un exemple de représentation d'une séquence vidéo par des tubes de mouvement.

On considère selon cet exemple quatre tubes de mouvement Tu1, Tu2, Tu3 et Tu4, s'étendant entre les images I0, I1, I2 et I3, correspondant respectivement aux instants t0, t1, t2 et t3 de la séquence vidéo.

Plus précisément, un tube de mouvement est défini comme un ensemble de pixels (bloc carré, rectangulaire, ou cube en 3D par exemple) et a pour caractéristiques :

- un instant de création, ou instant de début de tube,
- un instant de disparition, ou instant de fin de tube,
- un ensemble de positions (xt,yt) ou de déplacements (dxt,dyt) dépendant du temps t, t étant compris entre l'instant de création et l'instant de disparition du tube,
- une texture variant optionnellement dans le temps.

Par exemple, le tube Tu1 est créé à l'instant t0, et disparaît à l'instant t2. Cela signifie qu'avant l'instant t0, le tube Tu1 n'existe pas, et qu'après l'instant t2, le tube Tu1 n'existe plus. De même le tube Tu2 est créé à l'instant t0, et disparaît à l'instant t1, le tube Tu3 est créé à l'instant t1, et disparaît à l'instant t3, et le tube Tu4 est créé à l'instant t1, et disparaît à l'instant t2. De plus, chaque tube comporte ses propres valeurs de texture.

Autrement dit, si l'on considère par exemple l'image I0, le tube Tu1 correspond au bloc 1 de pixels de l'image I0, auquel on applique une « extension temporelle » t, pour t variant de t0 à t2.

Ainsi, les tubes ne sont donc pas réinitialisés à chaque instant, mais « survivent » à travers les images. En particulier, un tube de mouvement peut être défini pour des images non consécutives d'une séquence d'images. Par exemple, si un tube « disparaît » d'une image à un instant t, il reste en mémoire et peut « réapparaître » à l'instant t+1.

Ces tubes sont utilisés côté décodage pour reconstruire les images de la séquence. Par exemple, le tube Tu1 permet de réaliser les prédictions sur les images I1 et I2.

On peut également noter que les blocs de pixels associés aux différents tubes peuvent évoluer indépendamment les uns des autres. Ainsi, les tubes peuvent se chevaucher, comme par exemple les tubes Tu3 et Tu4 à l'instant t2 sur la figure 1, ce qui n'est pas possible avec les techniques basées maillage.

On peut également noter que l'évolution temporelle des tubes n'est pas cantonnée à une translation. Les blocs de pixels peuvent subir des transformations géométriques pour chaque image, y compris la première image, comme par exemple une rotation, une transformation affine, ou bien encore une transformation homographique:

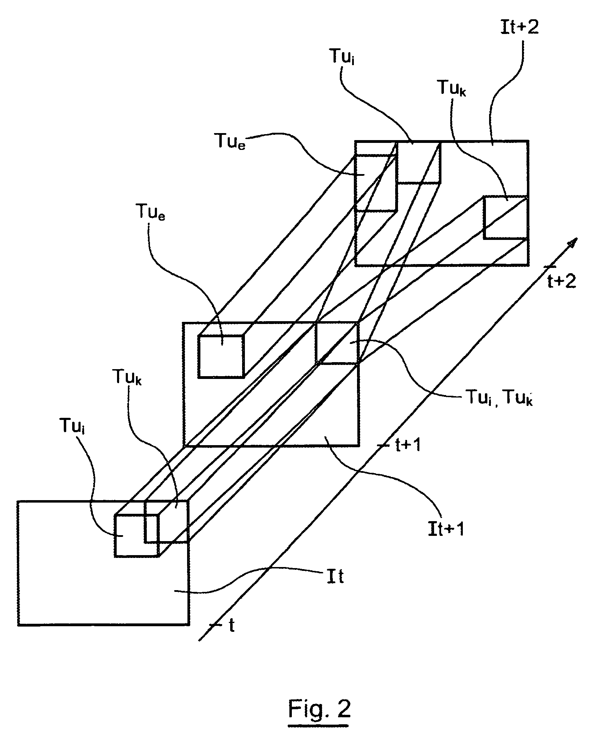

La figure 2 illustre plus précisément le chevauchement de différents tubes. Par exemple, les tubes $Tu_i$ et $Tu_k$ sont initialisés dans l'image It au temps t. Au temps t+1, les tubes $Tu_i$ et $Tu_k$ peuvent se chevaucher entièrement dans l'image It+1. Autrement dit, les tubes $Tu_i$ et $Tu_k$ correspondent alors au même bloc de pixels. Ceci survient par exemple lorsqu'une partie d'un objet, associée au bloc de pixels du tube $Tu_i$, est occultée par un autre objet, associé au bloc $Tu_k$. Ensuite, du fait de l'indépendance d'évolution des tubes, chaque tube $Tu_i$ ou $Tu_k$ peut partir dans une direction différente, selon le déplacement de l'objet associé à chacun des tubes.

Un tube de mouvement peut également se déformer au cours du temps (extension des mouvements de translation à des mouvements de rotation, déformation affine, homographique, etc). Par exemple, pour la figure 2, on considère le tube $Tu_1$ initié dans l'image It+1 à l'instant t+1, et disparaissant dans l'image It+2 à l'instant t+2. Le bloc de pixels correspondant au tube $Tu_1$, dans l'image It+2 peut être différent du bloc de pixels correspondant au même tube $Tu_1$ dans l'image It+1. Par exemple, le tube $Tu_1$ correspond à un bloc de 8x8 pixels dans l'image It+1, et à un bloc de 12x8 pixels dans l'image It+2. Dans ce cas, l'ensemble des pixels que comprend le tube varie au cours du temps. Afin de représenter les pixels du bloc correspondant au tube $Tu_1$ dans l'image It+2, une déformation du bloc contenant les valeurs des pixels modifiés définis initialement pour l'image It+1 peut être mise en oeuvre. Une telle déformation met par exemple en oeuvre une opération de type transformation homographique, transformation affine, rotation, etc.

Ainsi, une séquence vidéo est représentée par un ensemble de tubes de mouvement se déplaçant dans l'espace au cours du temps en suivant les trajectoires de mouvement de la séquence.

*5.2 Décodage*

On présente plus précisément en relation avec la figure 3 les principales étapes du procédé de décodage selon l'invention.

On considère pour ce faire un signal 30 représentatif d'une séquence d'images reçue par un décodeur.

Le procédé de décodage comprend tout d'abord une étape 31 d'extraction, à partir du signal 30, de tubes de mouvement associés chacun à un bloc de pixels. On considère selon l'invention que les tubes peuvent évoluer indépendamment les uns des autres. On considère également que deux tubes peuvent, à un instant donné, allouer à un même pixel d'une image des valeurs de texture différentes.

Chacun des tubes est alors défini par au moins les informations suivantes :

- un bloc de pixels de référence comprenant des informations de texture de référence ;
- des instants de début de tube et de fin de tube ;
- des informations de transition, permettant de mettre à jour ledit bloc de référence à au moins un instant t de ladite séquence.

Le bloc de pixels à l'instant de début d'un tube, appelé bloc de départ, peut correspondre au bloc de pixels de référence définissant ledit tube, ou peut être obtenu à partir d'une modification dudit bloc de pixels de référence. Ce bloc de départ n'appartient donc pas nécessairement à une image de la séquence, mais peut provenir d'une mémoire de stockage, d'une base de données, ...

On précise également que le bloc de pixels de référence (ou le bloc de pixels à l'instant de début d'un tube) peut être différent d'un tube de mouvement à un autre.

Par exemple, dans l'image I1 de la figure 1, le bloc de pixels à l'instant de début du tube Tu3 est le bloc 3, et le bloc de pixels à l'instant de début du tube Tu4 est le bloc 4.

On précise également que l'instant de début d'un tube peut être différent d'un tube de mouvement à un autre. Par exemple, le tube Tu 1 a un instant de début t0 et le tube Tu3 a un instant de début t1.

Ces informations de transition comprennent notamment des informations de modification de position et/ou déplacement du bloc dans l'image courante, et des informations de modification de la texture.

Au cours d'une étape 32 de traitement des informations de transition, le procédé de décodage délivre un bloc courant pour chacun des tubes dans une image courante à un instant t. Par exemple, si l'on cherche à reconstruire l'image I2 (notée image courante), on met à jour le bloc 3 du tube Tu3 dans l'image I2 à l'instant t2 en tenant compte du bloc 3 dans l'image I1 à l'instant t1 et des informations de transition associées à ce tube Tu3. Autrement dit, le bloc de départ peut évoluer au cours du temps en tenant compte des informations de transition. On parle alors de bloc courant.

Le procédé de décodage comprend ensuite une étape 33 de combinaison des informations associées aux blocs courants d'au moins deux desdits tubes se chevauchant dans une zone de chevauchement d'une image courante, de façon à reconstruire des pixels optimisés dans ladite zone de chevauchement.

Si on considère de nouveau la figure 1, on constate par exemple que les tubes Tu3 et Tu4 se chevauchent dans l'image I2. Un mécanisme de gestion des chevauchements est alors mis en place, basé sur une combinaison des informations associées aux tubes Tu3 et Tu4 (informations de texture notamment). Le mécanisme de gestion des chevauchements permet alors de définir quelle est la valeur reconstruite pour les pixels de l'image situés dans la zone de chevauchement.

Le procédé de décodage délivre alors une séquence d'images 34 reconstruites.

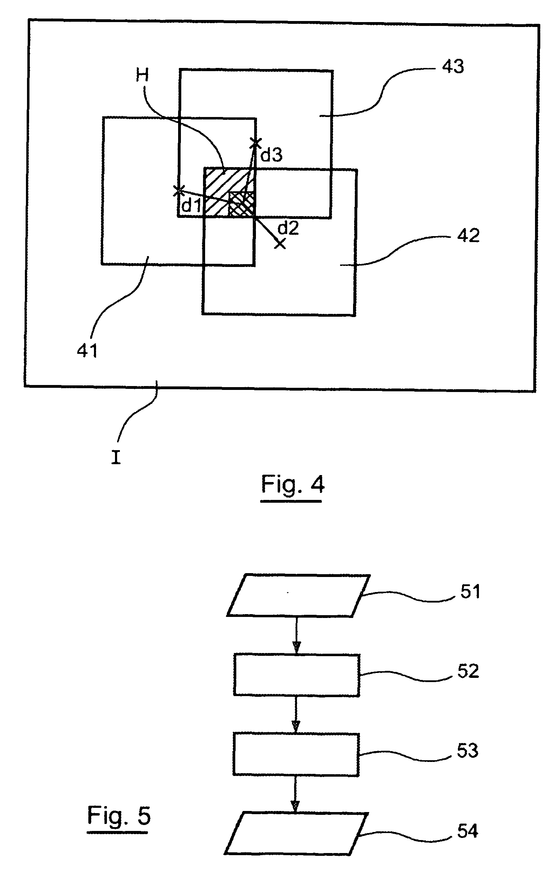

On illustre plus précisément en relation avec la figure 4 l'étape 33 de combinaison des informations à différents tubes de mouvement.

On considère par exemple une image I à un instant donné, comprenant trois tubes de mouvement associés chacun à un bloc de pixels. Par souci de simplification, on utilise la même notation pour le bloc et le tube correspondant. Sur la figure 4, les trois tubes 41, 42 et 43 se chevauchent dans la zone de chevauchement hachurée notée H.

Différentes techniques peuvent être mises en oeuvre pour la gestion de cette zone de chevauchement H.

Par exemple, l'étape de combinaison 33 met oeuvre une opération de calcul d'une moyenne de la valeur de texture attribuée à chaque pixel de la zone de chevauchement H, dans chacun des tubes se chevauchant, pour reconstruire les pixels de la zone de chevauchement. Ainsi, si un pixel P de la zone H porte la valeur 210 dans le bloc 41, 230 dans le bloc 42, et 240 dans le bloc 43, le pixel reconstruit portera la valeur 226 (avec $226 = \dfrac{210 + 230 + 240}{3}$).

Il est également envisageable de pondérer cette moyenne, en pondérant les différents tubes de mouvement. Par exemple, une information de priorité peut être associée à chacun des tubes. Cette information de priorité peut correspondre à une information de qualité. Dans ce cas, seule la valeur de texture associée au tube portant l'information de priorité la plus grande sera prise en compte.

L'information de priorité peut également correspondre à une information de profondeur. Dans ce cas, il est possible de tenir compte uniquement de la valeur de texture associée au tube portant l'information de profondeur la plus grande. Il est aussi possible de combiner les valeurs de texture associées à tous les tubes se chevauchant en pondérant ces valeurs par la profondeur associée à chaque tube.

Selon une autre variante, il est également possible de tenir compte de la valeur de texture associée à un seul des tubes se chevauchant : par exemple, on considère uniquement le tube le plus long (en durée), c'est-à-dire le tube défini sur le plus grand nombre d'images consécutives ou non consécutives, ou bien le tube le plus récent, c'est-à-dire le tube dont l'instant de création est le plus proche temporellement. Il est également possible de combiner les valeurs de texture associées à tous les tubes se chevauchant en pondérant ces valeurs par la durée temporelle (différence entre l'instant de fin et l'instant de création) de chaque tube ou bien par une fonction monotone décroissante (ou inverse) de la distance temporelle par rapport à l'instant de création de chaque tube (différence entre l'instant courant et l'instant de création).

Encore une autre technique repose sur la prise en compte de la position du pixel considéré dans chacun des tubes. Par exemple, un pixel P de la zone de chevauchement H est situé à la distance d1 du centre du tube 41, à la distance d2 du centre du tube 42, et à la distance d3 du centre du tube 43. On peut alors tenir compte uniquement de la valeur de texture associée au tube le plus proche du pixel à reconstruire, par exemple le tube 42 si l'on considère d2<d1 et d2<d3. On peut aussi pondérer les pixels des tubes se chevauchant par rapport à leur position dans le tube.

Dans un autre mode de réalisation, on peut noter que l'étape d'extraction 31 délivre différents types de tube : soit des tubes de base, soit des tubes de raffinement. Ces tubes de raffinement permettent notamment d'améliorer la restitution des tubes de base.

L'invention trouve ainsi selon ce mode de réalisation des applications dans le codage et le décodage de données échelonnable (ou « scalable »), présentant une qualité adaptable et une résolution spatio-temporelle variable.

L'invention trouve également selon ce mode de réalisation des applications dans le codage et le décodage robuste de données.

Dans ce mode de réalisation, la gestion de la zone de chevauchement H permet d'ajouter les informations du tube de raffinement à celles du tube de base, lors de l'étape de combinaison 33.

Plus précisément, les tubes de raffinement peuvent être de deux types :

- les tubes additifs, permettant un raffinement en qualité d'un tube de base, et comprenant des valeurs de résidus. Dans ce cas, la combinaison des informations du tube de base et des informations de restitution du tube de raffinement est une addition ;

- les tubes descriptifs, comprenant des informations de description délivrant une deuxième description complémentaire et/ou redondante d'une première description fournie par des informations d'un tube de référence. Par exemple, la première description permet de décrire les pixels pairs d'un bloc et la deuxième description permet de décrire les pixels impairs. Dans ce cas, la combinaison des informations du tube de base et du tube de raffinement peut être une pondération des informations du tube de base et des informations du tube de raffinement. Il est également possible de tenir compte uniquement des informations du tube de base ou des informations du tube de raffinement.

On considère dans ce cas qu'un tube de base et le (ou les) tube(s) de raffinement qui le détaille sont liés, et que leurs évolutions temporelles sont dépendantes.

On décrit ci-après un exemple d'algorithme pour la mise en oeuvre du procédé de décodage pour le décodage d'un signal représentatif d'une séquence d'images :

- lecture d'information définissant une liste de tubes de référence, ou de bloc de pixels de référence, notamment si cette phase est mise en oeuvre côté codeur ;
- pour chaque tube de référence :

  - lecture d'une indication d'utilisation ou non de ce tube de référence pour la reconstruction d'une image courante ;
  - si ce tube est utilisé :

    ○ lecture des informations de transition associées le tube utilisé, c'est-à-dire des informations de modification de la texture et de modification de position et/ou déplacement du bloc,
    ○ mise à jour des informations de transition associées aux tubes (i.e. mise à jour de la texture et de la position et/ou déplacement) ;

- pour chaque bloc de l'image courante :

- lecture d'une indication d'utilisation ou non d'une prédiction par tubes de mouvement ;
- lecture d'une indication de création ou non d'un nouveau tube ;
- si un nouveau tube doit être créé, lecture des informations définissant le nouveau tube de mouvement ;

- lecture des informations de mise à jour de la liste de référence des tubes ;
- reconstruction de l'image courante.

La reconstruction de l'image courante est ainsi réalisée par la combinaison des prédictions issues des différents tubes de mouvement. Chaque tube définit ainsi une prédiction $\tilde{B}_t (x,y,t)$, obtenue par compensation en mouvement et éventuellement interpolation de la texture de ce tube au point (x,y) et à l'instant t.

Par exemple, et comme illustré en relation avec la figure 4, on combine ces différentes prédictions comme suit :

$$I(x,y,t) = \sum_{i \in \text{tube de base}} w_i \tilde{B}_i(x,y,t) + \sum_{i \in \text{tube de raffinement}} w_j \tilde{B}_j(x,y,t)$$

Les poids $w_i$ et $w_j$ sont introduits afin de prendre en compte les pondérations à appliquer lors de prédictions multiples.

Ainsi, selon une première variante, on peut définir ces poids par :

$$w = 1/\{\text{nombre de prédiction en ce point}\}$$

Selon une deuxième variante, chaque tube définit un poids $w_t$ lié à la position du point par rapport au tube (par exemple poids inversement proportionnel à la distance au centre de ce tube) puis $w_i$ est défini comme $w_t$ divisé par la somme des différents $w_t$.

Selon une troisième variante, la combinaison des prédictions des tubes pour obtenir la prédiction finale peut faire appel à des opérations différentes d'opérations de pondération, en utilisant par exemple des techniques issues du codage par description multiple.

*5.3 Codage*

On présente désormais en relation avec la figure 5 les principales étapes du procédé de codage selon l'invention.

Plus précisément, on considère côté codage une séquence d'images 51, que l'on souhaite coder.

Au cours d'une première étape d'insertion 52, on insert dans un signal représentatif de la séquence, des tubes de mouvement, tels que définis précédemment.

Plus précisément, chacun des tubes de mouvement est défini par au moins les informations suivantes :

- un bloc de pixels de référence comprenant des informations de texture de référence ;
- des instants de début de tube et de fin de tube ;
- des informations de transition, permettant de mettre à jour ledit bloc de référence à au moins un instant t de ladite séquence.

Au cours d'une étape suivante de génération 53, les informations de transition définissant les tubes de mouvement sont générées. Autrement dit, on définit pour chaque tube de mouvement les évolutions du bloc de pixels de référence au cours du temps.

On génère ainsi un signal 54 représentatif de la séquence d'images 51, comprenant des tubes de mouvement, et permettant, au décodage, une combinaison des informations associées aux blocs courants d'au moins deux des tubes se chevauchant dans une zone de chevauchement d'une image courante, pour reconstruire des pixels optimisés dans la zone de chevauchement.

On décrit ci-après un exemple d'algorithme pour la mise en oeuvre du procédé de codage pour le codage d'une séquence vidéo d'images. Un tel algorithme comprend deux phases principales : une phase d'établissement des tubes, et une phase de codage des tubes.

*A) Phase d'établissement des tubes :*

Dans un premier temps, une séquence vidéo est décomposée en un ensemble de tubes de mouvement.

Pour la première image d'une séquence, on initialise un tube de mouvement pour chaque bloc d'un ensemble de blocs recouvrant la première image. Cet ensemble de blocs recouvrant la première image peut comprendre uniquement des blocs disjoints, c'est-à-dire qui n'ont pas de pixels en commun, ou bien des blocs se superposant en partie, c'est-à-dire qu'au moins deux blocs comprennent un même pixel. Le découpage considéré est alors redondant, ce qui permet par exemple de faire des descriptions multiples pour un même contenu, ou encore de mieux estimer le mouvement dans les zones de frontières d'objets.

Ces tubes de mouvement permettent de définir une liste de tubes de référence.

On considère alors le codage d'une image à coder, étant donné au préalable une liste d'images ou de blocs de pixels de référence connus (par exemple déjà codés/décodés et stockés en mémoire cache), ainsi qu'une liste de tubes de référence.

La phase d'établissement des tubes de mouvement pour la mise en oeuvre du procédé de codage comprend les étapes suivantes :

- pour chaque tube dans la liste des tubes de référence :

   o détermination d'une information de position du tube dans l'image à coder de la séquence. Autrement dit, on cherche quelle serait la position de ce tube dans l'image à coder, par exemple en recherchant quelle translation de position mènerait à la meilleure prédiction pour l'image à coder ;
   o détermination d'une indication d'utilisation ou non du tube de référence, en utilisant par exemple une technique de seuillage sur la prédiction du tube ;
   o mise à jour des informations de texture, en définissant par exemple un résidu à ajouter aux valeurs de texture définies dans le tube à un instant de référence ;

- pour chaque bloc de l'image à coder :

   o détermination d'une indication d'utilisation ou non d'une prédiction par tube de mouvement pour la reconstruction du bloc :

      ■ si un bloc de l'image à coder n'est pas codé à l'aide des prédiction issues des tubes de référence, alors on code les valeurs de texture de ce bloc dans l'image à coder et on l'associe à un nouveau tube qui viendra compléter la liste de tubes de référence à l'issue du codage de l'image courante ;
      ■ si un bloc de l'image est reconstruit à partir des prédictions des tubes de référence, soit on décide de ne rien coder de plus, soit on décide d'initier un tube de raffinement sur ce bloc (c'est-à-dire un tube additif comprenant des valeurs de résidus à ajouter, ou un tube de description comprenant des valeurs représentatives du bloc).

*B) Phase de codage des tubes :*

Afin de coder les différents tubes, un schéma de type intra-résidu est utilisé selon cet algorithme de mise en oeuvre du codage :

- lors de la création d'un tube, on code les valeurs des pixels du bloc considéré dans l'image par une technique classique de codage par bloc, par exemple en réutilisant un mode de codage intra défini dans le schéma de codage H.264 pour un bloc de taille 4x4, 8x8 ou 16x16 ;
- lors de la mise à jour de la texture d'un tube de référence, un résidu à ajouter aux valeurs du bloc de pixels de référence est codé, par exemple en réutilisant un mode de codage des résidus défini dans le schéma de codage H.264 pour un bloc de taille 4x4, 8x8 ou 16x16 ;
- les informations de transition (position des tubes de référence notamment) sont codées pour chaque nouvelle image à coder, par exemple en utilisant une technique de codage d'une information de mouvement de bloc comme utilisé dans le schéma de codage H.264.

On obtient donc le déroulement suivant pour le codage d'une image :

- codage de la liste de tubes de référence utilisée, si une telle liste a été créée. Cette étape peut être omise par utilisation de la liste préétablie dans les codages d'images précédentes ;
- pour chaque tube de référence :

  o codage de l'indication d'utilisation ou non du tube de référence pour l'image courante ;
  o si ce tube est utilisé : codage des informations de modification de la texture et de modification de position et/ou de déplacement ;

- pour chaque bloc de l'image à coder :

  o codage de l'indication d'utilisation ou non d'une prédiction à l'aide d'au moins un tube de mouvement ;
  o codage de la création ou non d'un nouveau tube à partir de ce bloc ;
  o si un nouveau tube est créé,

    ■ codage du type du nouveau tube,
    ■ codage de ses valeurs de texture, si le nouveau tube est un tube de description, ou de résidu, si le nouveau tube est un tube additif.

- codage des informations de mise à jour de la liste de tubes de référence, par exemple en supprimant les tubes pour lesquels on a atteint l'instant de disparition.

*5.4 Structures du codeur et du décodeur*

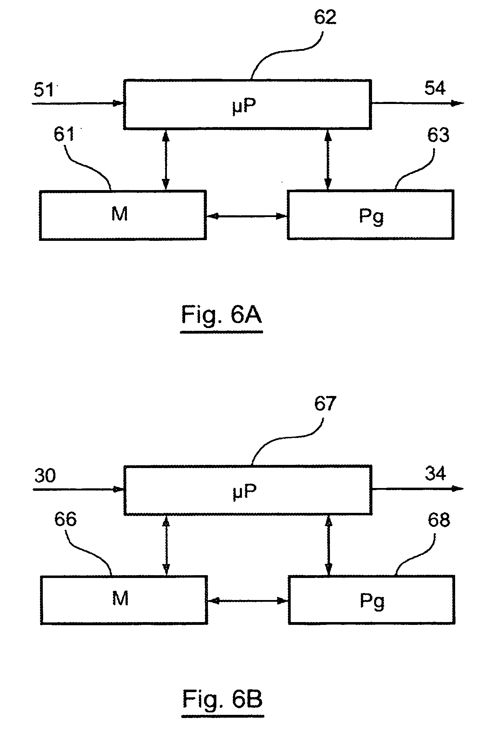

On présente finalement, en relation avec les figures 6A et 6B, les structures simplifiées d'un dispositif de codage et d'un dispositif de décodage mettant respectivement en oeuvre une technique de codage et une technique de décodage telles que décrites ci-dessus.

Un dispositif de codage tel qu'illustré en figure 6A comprend une mémoire 61 constituée d'une mémoire tampon, une unité de traitement 62, équipée par exemple d'un microprocesseur μP, et pilotée par le programme d'ordinateur 63, mettant en oeuvre le procédé de codage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée une séquence d'images 51 à coder. Le microprocesseur de l'unité de traitement 62 met en oeuvre les étapes du procédé de codage décrit précédemment, selon les instructions du programme d'ordinateur 63, pour coder la séquence d'images représentées par des tubes de mouvement. Pour cela, le dispositif de codage comprend, outre la mémoire tampon 61, des moyens d'insertion de tubes de mouvement, et des moyens de génération des informations de transition définissant les tubes de mouvement. Ces moyens sont pilotés par le microprocesseur de l'unité de traitement 62.

L'unité de traitement 62 délivre en sortie un signal 54 représentatif de la séquence d'images, comprenant des tubes de mouvement.

Un dispositif de décodage tel qu'illustré en figure 6B comprend une mémoire 66 constituée d'une mémoire tampon, une unité de traitement 67, équipée par exemple d'un microprocesseur μP, et pilotée par le programme d'ordinateur 68, mettant en oeuvre le procédé de décodage selon l'invention.

A l'initialisation, les instructions de code du programme d'ordinateur 68 sont par exemple chargées dans une mémoire RAM avant d'être exécutées par le processeur de l'unité de traitement 67. L'unité de traitement 67 reçoit en entrée un signal 30 représentatif d'une séquence d'images comprenant des tubes de mouvement. Le microprocesseur de l'unité de traitement 67 met en oeuvre les étapes du procédé de décodage décrit précédemment, selon les instructions du programme d'ordinateur 68, pour reconstruire les images de la séquence. Pour cela, le dispositif de décodage comprend, outre la mémoire tampon 66, des moyens d'extraction du signal 30 de tubes de mouvement, des moyens de traitement de informations de transition, et des moyens de combinaison des informations associées aux blocs courants d'au moins deux desdits tubes se chevauchant. Ces moyens sont pilotés par le microprocesseur de l'unité de traitement 67.

L'unité de traitement 67 délivre une séquence d'images reconstruites 34.

**Revendications**

**1.** Procédé de décodage d'un signal représentatif d'une séquence d'images, **caractérisé en ce qu'**il comprend les étapes suivantes :

- extraction (31) dudit signal de tubes de mouvement, un tube comprenant un bloc de pixels pouvant évoluer indépendamment d'au moins un autre tube,

deux tubes pouvant, à un instant donné, allouer à un même pixel d'une desdites images des valeurs différentes, chacun desdits tubes étant défini par au moins les informations suivantes :

- un bloc de pixels de référence comprenant des informations de texture de référence ;
- des instants de début de tube et de fin de tube ;
- des informations de transition, permettant de mettre à jour ledit bloc de référence à au moins un instant t de ladite séquence ;

- traitement (32) desdites informations de transition, délivrant un bloc courant pour chacun desdits tubes dans une image courante à un instant t ;
- combinaison (33) des informations associées aux blocs courants d'au moins deux desdits tubes se chevauchant dans une zone de chevauchement de ladite image courante, de façon à reconstruire des pixels optimisés dans ladite zone de chevauchement.

2. Procédé de décodage selon la revendication 1, **caractérisé en ce que** ladite étape de combinaison (33) comprend, pour au moins un pixel de ladite zone de chevauchement, une opération de calcul d'une moyenne de la valeur de texture attribuée audit pixel dans chacun desdits tubes se chevauchant.

3. Procédé de décodage selon la revendication 2, **caractérisé en ce que** ladite moyenne est une moyenne pondérée, en fonction d'au moins un des critères appartenant au groupe comprenant:

- une information de profondeur associée à chacun desdits tubes ;
- une information de priorité associée à chacun desdits tubes ;
- l'instant de création et/ou la durée de chacun desdits tubes ;
- une information de position du pixel considéré dans chacun desdits tubes ;
- une information relative à un type de tube de chacun desdits tubes.

4. Procédé de décodage selon l'une quelconque des revendications 1 à 3, **caractérisé en ce que** le bloc de pixels à l'instant de début d'un tube, appelé bloc de départ, correspond au bloc de pixels de référence définissant ledit tube, ou est obtenu à partir d'une modification dudit bloc de pixels de référence.

5. Procédé de décodage selon l'une quelconque des revendications 1 à 4, **caractérisé en ce que** ladite étape d'extraction (31) délivre des tubes de base et des tubes de raffinement destinés à améliorer la restitution d'au moins un tube de base.

6. Procédé de décodage selon la revendication 5, **caractérisé en ce que** lesdits tubes de raffinement comprennent des tubes additifs et des tubes de description, un tube additif comprenant des informations de résidu destinées à être ajoutées aux informations d'un tube de base, et un tube de description comprenant des informations de description délivrant une deuxième description complémentaire et/ou redondante d'une première description fournie par des informations d'un tube de base.

7. Procédé de décodage selon l'une quelconque des revendications 1 à 6, **caractérisé en ce que** lesdites informations de transition comprennent :

- des informations de modification de position et/ou de déplacement dudit bloc dans ladite image courante ; et
- des informations de modification de ladite texture.

8. Procédé de décodage selon la revendication 7, **caractérisé en ce que** lesdites informations de transition comprennent des informations de déformation dudit bloc mettant en oeuvre au moins une des opérations appartenant au groupe comprenant :

- une transformation homographique ;
- une transformation affine ;
- une rotation ; et **en ce que** ladite étape de traitement (32) effectue ladite opération en fonction desdites informations de déformation.

9. Procédé de décodage selon l'une quelconque des revendications 1 à 8, **caractérisé en ce que** ladite étape d'extraction (31) comprend une étape de lecture, à un instant t, pour chacun desdits tubes d'au moins une des informations suivantes :

- une indication d'utilisation ou non dudit tube ;
- une indication d'utilisation ou non d'une prédiction pour ledit tube ;
- une information de position dudit tube dans l'image ;
- une information relative à un type de tube ;
- des données de texture.

10. Dispositif de décodage d'un signal représentatif d'une séquence d'images, **caractérisé en ce qu'**il comprend :

- des moyens d'extraction (31) dudit signal de tubes de mouvement, un tube comprenant un bloc de pixels pouvant évoluer indépendamment d'au moins un autre tube,
deux tubes pouvant, à un instant donné, allouer à un même pixel d'une desdites images des valeurs différentes, chacun desdits tubes étant défini par au moins les informations suivantes :

- un bloc de pixels de référence comprenant des informations de texture de référence ;
- des instants de début de tube et de fin de tube ;
- des informations de transition, permettant de mettre à jour ledit bloc de référence à au moins un instant t de ladite séquence ;

- des moyens de traitement (32) desdites informations de transition, délivrant un bloc courant pour chacun desdits tubes dans une image courante à un instant t ;
- des moyens de combinaison (33) des informations associées aux blocs courants d'au moins deux desdits tubes se chevauchant dans une zone de chevauchement de ladite image courante, de façon à reconstruire des pixels optimisés dans ladite zone de chevauchement.

11. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de décodage selon l'une au moins des revendications 1 à 9.

**Claims**

1. Method for decoding a signal representative of an image sequence, **characterized in that** it comprises the following steps:

- extracting (31) motion tubes from said signal, a tube comprising a block of pixels that may possibly evolve independently of at least one other tube,
two tubes possibly, at a given instant, allocating different values to one and the same pixel of one of said images, each of said tubes being defined by at least the following information cues:

- a block of reference pixels comprising reference texture information cues;
- start-of-tube and end-of-tube instants;
- transition information cues, making it possible to update said reference block at at least one instant t of said sequence;

- processing (32) said transition information cues, delivering a current block for each of said tubes in a current image at an instant t;
- combining (33) the information cues associated with the current blocks of at least two of said tubes overlapping in an overlap zone of said current image, so as to reconstruct pixels which are optimized in said overlap zone.

2. Decoding method according to Claim 1, **characterized in that** said combining step (33) comprises, for at least one pixel of said overlap zone, an operation of calculating a mean of the texture value allotted to said pixel in each of said overlapping tubes.

3. Decoding method according to Claim 2, **characterized in that** said mean is a weighted mean, as a function of at least one of the criteria belonging to the group comprising:

- a depth information cue associated with each of said tubes;
- a priority information cue associated with each of said tubes;
- the instant of creation and/or the duration of each of said tubes;
- a position information cue for the pixel considered in each of said tubes;
- an information cue relating to a type of tube of each of said tubes.

4. Decoding method according to any one of Claims 1 to 3, **characterized in that** the block of pixels at the start instant of a tube, called the starting block, corresponds to the block of reference pixels defining said tube, or is obtained on the basis of a modification of said block of reference pixels.

5. The decoding method according to any one of Claims 1 to 4, **characterized in that** said extraction step (31) delivers base tubes and refinement tubes intended to improve the restitution of at least one base tube.

6. Decoding method according to Claim 5, **characterized in that** said refinement tubes comprise additive tubes and description tubes,
an additive tube comprising residual information cues intended to be added to the information cues of a base tube, and a description tube comprising description information cues delivering a second description complementary and/or redundant to a first description provided by information cues of a base tube.

7. Decoding method according to any one of Claims 1 to 6, **characterized in that** said transition information cues comprise:

- information cues regarding modification of position and/or displacement of said block in said current image; and
- information cues regarding modification of said texture.

8. Decoding method according to Claim 7, **characterized in that** said transition information cues comprise information cues regarding deformation of said block implementing at least one of the operations belonging to the group comprising:

- a homographic transformation;
- an affine transformation;
- a rotation;

and **in that** said processing step (32) performs said operation as a function of said deformation information cues.

9. Decoding method according to any one of Claims 1 to 8, **characterized in that** said extraction step (31) comprises a step of reading, at an instant t, for each of said tubes at least one of the following information cues:

- an indication of use or non-use of said tube;
- an indication of use or non-use of a prediction for said tube;
- an information cue regarding position of said tube in the image;
- an information cue relating to a type of tube;
- texture data.

10. Device for decoding a signal representative of an image sequence, **characterized in that** it comprises:

- means (31) for extracting motion tubes from said signal, a tube comprising a block of pixels that may possibly evolve independently of at least one other tube,
two tubes possibly, at a given instant, allocating different values to one and the same pixel of one of said images, each of said tubes being defined by at least the following information cues:

- a block of reference pixels comprising reference texture information cues;
- start-of-tube and end-of-tube instants;
- transition information cues, making it possible to update said reference block at at least one instant t of said sequence;

- means (32) for processing said transition information cues, delivering a current block for each of said tubes in a current image at an instant t;
- means (33) for combining the information cues associated with the current blocks of at least two of said tubes overlapping in an overlap zone of said current image, so as to reconstruct pixels which are optimized in said overlap zone.

11. Computer program product downloadable from a communication network and/or recorded on a medium readable by computer and/or executable by a processor, **characterized in that** it comprises program code instructions for the implementation of the decoding method according to one at least of Claims 1 to 9.

**Patentansprüche**

1. Verfahren zur Decodierung eines für eine Bildfolge repräsentativen Signals, **dadurch gekennzeichnet, dass** es die folgenden Schritte enthält:

- Entnahme (31) von Bewegungsröhren aus dem Signal, wobei eine einen Pixelblock enthaltende Röhre sich unabhängig von mindestens einer anderen Röhre bewegen kann,
wobei zwei Röhren zu einem gegebenen Zeitpunkt dem gleichen Pixel eines der Bilder unterschiedliche Werte verleihen können,
wobei jede der Röhren durch mindestens die folgenden Informationen definiert ist:

- einen Bezugspixelblock, der Bezugstexturinformationen enthält;
- Röhrenanfangs- und -endzeitpunkte;
- Übergangsinformationen, die es ermöglichen, den Bezugsblock zu mindestens einem Zeitpunkt t der Folge zu aktualisieren;

- Verarbeitung (32) der Übergangsinformationen, die einen laufenden Block für jede der Röhren in einem laufenden Bild zu einem Zeitpunkt t liefert;
- Kombination (33) der den laufenden Blöcken von mindestens zwei der sich in einer Überlappungszone des laufenden Bilds überlappenden Röhren zugeordneten Informationen, um in der Überlappungszone optimierte Pixel zu rekonstruieren.

2. Decodierverfahren nach Anspruch 1, **dadurch gekennzeichnet, dass** der Kombinationsschritt (33) für mindestens ein Pixel der Überlappungszone einen Vorgang der Berechnung eines Mittelwerts des Texturwerts enthält, der dem Pixel in jeder der sich überlappenden Röhren zugeordnet ist.

3. Decodierverfahren nach Anspruch 2, **dadurch gekennzeichnet, dass** der Mittelwert ein abhängig von mindestens einem der Kriterien gewichteter Mittelwert ist, die zu der Gruppe gehören, die enthält:

- eine jeder der Röhren zugeordnete Tiefeninformation;
- eine jeder der Röhren zugeordnete Prioritätsinformation;
- den Zeitpunkt der Erzeugung und/oder die Dauer jeder der Röhren;
- eine Positionsinformation des betrachteten Pixels in jeder der Röhren;
- eine Information bezüglich eines Röhrentyps jeder der Röhren.

4. Decodierverfahren nach einem der Ansprüche 1 bis 3, **dadurch gekennzeichnet, dass** der Pixelblock zum Anfangszeitpunkt einer Röhre, Ausgangsblock genannt, dem die Röhre definierenden Bezugspixelblock entspricht, oder ausgehend von einer Veränderung des Bezugspixelblocks erhalten wird.

5. Decodierverfahren nach einem der Ansprüche 1 bis 4, **dadurch gekennzeichnet, dass** der Entnahmeschritt (31) Basisröhren und Verfeinerungsröhren liefert, die dazu bestimmt sind, die Wiedergabe mindestens einer Basisröhre zu verbessern.

6. Decodierverfahren nach Anspruch 5, **dadurch gekennzeichnet, dass** die Verfeinerungsröhren zusätzliche Röhren und Beschreibungsröhren enthalten, wobei eine zusätzliche Röhre Restinformationen enthält, die dazu bestimmt sind, zu den Informationen einer Basisröhre hinzugefügt zu werden, und eine Beschreibungsröhre Beschreibungsinformationen enthält, die eine zweite komplementäre und/oder redundante Beschreibung einer ersten Beschreibung enthält, die von Informationen einer Basisröhre geliefert wird.

7. Decodierverfahren nach einem der Ansprüche 1 bis 6, **dadurch gekennzeichnet, dass** die Übergangsinformationen enthalten:

- Positionsänderungs- und/oder Verschiebeinformationen des Blocks im laufenden Bild; und
- Änderungsinformationen der Textur.

8. Decodierverfahren nach Anspruch 7, **dadurch gekennzeichnet, dass** die Übergangsinformationen Verformungsinformationen des Blocks enthalten, die mindestens einen der Vorgänge anwenden, der zu der Gruppe gehört, die enthält:

- eine homographische Umwandlung;
- eine affine Umwandlung;
- eine Drehung;

und dass der Verarbeitungsschritt (32) den Vorgang abhängig von den Verformungsinformationen durchführt.

9. Decodierverfahren nach einem der Ansprüche 1 bis 8, **dadurch gekennzeichnet, dass** der Entnahmeschritt (31) einen Leseschritt, zu einem Zeitpunkt t, für jede der Röhren, mindestens einer der folgenden Informationen enthält:

- eine Anzeige der Nutzung oder nicht der Röhre;
- eine Anzeige der Nutzung oder nicht einer Vorhersage für die Röhre;
- eine Positionsinformation der Röhre im Bild;
- eine Information betreffend einen Röhrentyp;
- Texturdaten.

10. Vorrichtung zur Decodierung eines für eine Bildfolge repräsentativen Signals, **dadurch gekennzeichnet, dass** sie enthält:

- Einrichtungen (31) zur Entnahme von Bewegungsröhren aus dem Signal, wobei eine einen Pixelblock enthaltende Röhre sich unabhängig von mindestens einer anderen Röhre bewegen kann,
wobei zwei Röhren zu einem gegebenen Zeitpunkt einem gleichen Pixel eines der Bilder unterschiedliche Werte verleihen können,
wobei jede der Röhren durch mindestens die folgenden Informationen definiert wird:

- einen Bezugspixelblock, der Bezugstexturinformationen enthält;
- Röhren-Anfangs- und endzeitpunkte;
- Übergangsinformationen, die es ermöglichen, den Bezugsblock zumindest zu einem Zeitpunkt t der Folge zu aktualisieren;

- Verarbeitungseinrichtungen (32) der Übergangsinformationen, die einen laufenden Block für jede der Röhren in einem laufenden Bild zu einem Zeitpunkt t liefern;
- Einrichtungen (33) zur Kombination der den laufenden Blöcken mindestens zweier der sich in einer Überlappungszone des laufenden Bilds überlappenden Röhren zugeordneten Informationen, um in der Überlappungszone optimierte Pixel zu rekonstruieren.

11. Computerprogrammprodukt, das von einem Kommunikationsnetzwerk heruntergeladen und/oder auf einem computerlesbaren Träger gespeichert und/oder von einem Prozessor ausgeführt werden kann, **dadurch gekennzeichnet, dass** es Programmcodeanweisungen zur Durchführung des Decodierverfahrens nach mindestens einem der Ansprüche 1 bis 9 enthält.

Fig. 1

Fig. 3

Fig. 2

Fig. 4

Fig. 5

Fig. 6A

Fig. 6B

**RÉFÉRENCES CITÉES DANS LA DESCRIPTION**

**Littérature non-brevet citée dans la description**

- Tube-based video coding. **HSU R et al.** SIGNAL PROCESSING, IMAGE COMMUNICATION. ELSEVIER SCIENCE PUBLISHERS